# EUROPEAN PATENT SPECIFICATION

(11) **EP 2 355 986 B1**
(45) Date of publication and mention of the grant of the patent: **03.04.2013**
(21) Application number: 08875334.8
(22) Date of filing: 18.11.2008
(51) Int. Cl.: B60C 15/06, B60C 17/00

(54) **PNEUMATIC VEHICLE TIRE**
FAHRZEUGLUFTREIFEN
PNEUMATIQUE DE VÉHICULE

(43) Date of publication of application: 17.08.2011
(73) Proprietor: Pirelli Tyre S.P.A., 20126 Milan (IT)
(72) Inventor: MUEHLHAUSE, Christof, 63755 Alzenau (DE); MEURET, Jochen, 63486 Bruchköbel (DE); MICHEL, Thomas, 64757 Rothenberg (DE); SEEGER, Stefan, 64747 Breuberg (DE); MUHN, Roland, 64732 Bad König (DE)
(74) Representative: Preissner, Nicolaus
(86) International application number: PCT/EP2008/065776
(87) International publication number: WO 2010/057523

(56) References cited:
- EP-A- 1 002 668
- EP-A- 1 129 870
- WO-A-2008/062608

## Description

### Field of the Invention

The invention relates to a runflat pneumatic vehicle tire comprising a carcass, said carcass being associated with two bead cores in respective bead portions of the tire, a belt structure provided between the carcass and a tread strip, a pair of sidewalls located at an intermediate portion of the tire between each bead portion and the tread strip, a runflat reinforcement arranged at the inner side of each sidewall, a reinforcer arranged in each bead portion of the tire, and a bead filler extending from each bead core along the respective reinforcer.

Such runflat tires feature a stiffer internal construction, which is capable of temporarily carrying the weight of the vehicle, even after the tire has lost all air pressure. To provide the self-supporting capability, a runflat reinforcement is provided at the inner side of each sidewall.

### Prior Art

EP-B-1 013 482 discloses a vehicle tire comprising a carcass which extends between two bead rings, a belt arrangement provided between the carcass and a tread strip, and also rubber reinforcing plies arranged in the sidewall regions, which adopt a supporting function when the tyre is deflated. A single rubber reinforcing ply is arranged radially within a first carcass ply and its maximum thickness is disposed in the upper half of the sidewall height. The rubber reinforcing ply extends from the bead apex region up to and beneath the edge region of the belt ply. The bead apex, which extends approximately up to the half sidewall height, is surrounded by the first carcass ply. A reinforcing or stiffening strip is provided between the bead apex and the turned around end of the carcass ply, consisting of a textile material which extends up to and into the direct vicinity of the bead ring.

EP-A-1 002 668 discloses a run-flat tire comprising a run-flat reinforcement, arranged at the inner side of each sidewall, and a bead filler. Two rubber protection sheets being softer than the bead filler rubber are inserted in the bead filler. The bead filler extends beyond the ends of the two rubber protection sheets. The bead filler rubber has a relatively high hardness.

### Summary of the Invention

The applicant has tackled the problem of providing an improvement of the driving performance of runflat tires, particularly of the handling and comfort properties of a runflat tire.

This problem is solved by a pneumatic vehicle tire comprising a carcass, said carcass being associated with two bead cores in bead portions of the tire, a belt structure provided between the carcass and a tread strip, a pair of sidewalls, a runflat reinforcement arranged at the inner side of each sidewall, a reinforcer arranged in each bead portion of the tire, and a bead filler extending from the bead core along the reinforcer, characterized in that the reinforcer is arranged internally of the bead filler, the reinforcer comprises metal cords, the bead filler extends beyond an end of the reinforcer, and the bead filler is made of a soft rubber compound with an IHRD hardness lower than 80.

The pneumatic vehicle tire according to the invention thus comprises a reinforcer which is arranged at the inner side of each bead portion of the tire. The reinforcer comprises metal cords, for example steel cords. The bead filler extends beyond the end tip of the reinforcer. Thus, risk of damage of the carcass by the reinforcer can be reduced.

The bead filler is made of a soft rubber compound with an IHRD hardness lower than 80, preferably between 75 and 79. It has been found that the soft rubber compound of the bead filler contributes to give better comfort properties to the runflat tire. In particular, the use of a soft compound for the bead filler effects better dampening properties which provide better comfort and noise properties.

The metallic reinforcer improves the handling properties of the runflat tire, since the torsional stiffness of the tire is improved. Positioning of the reinforcer at the inner side of the bead provides a direct transmission of the forces from the carcass to the rim which further increases the torsional stiffness.

The runflat tire according to the invention features higher runflat performance, less rolling resistance and improved comfort properties.

The reinforcer is preferably directly connected to an inner portion of the carcass. Owing to the direct contact between the reinforcer and the inner carcass, the torsional stiffness of the tire is increased.

In an alternative embodiment the reinforcer is arranged between two carcass layers. This embodiment also provides an increase of the torsional stiffness due to the direct contact between the reinforcer and the carcass layers.

Other features and advantages of the present invention will become apparent from the following more detailed description of the embodiments, which describe, by way of example, the principles of the invention.

### Brief Description of the Drawings

Fig. 1 is a schematic cross-section of a vehicle tire according to the invention;
Fig. 2 is an enlarged view of the sidewall region of Fig. 1;
Fig. 3 is a schematic cross-section through a second embodiment of the invention;
Fig. 4 is an enlarged view of the sidewall according to Fig. 3; and

### Detailed Description of the Drawings

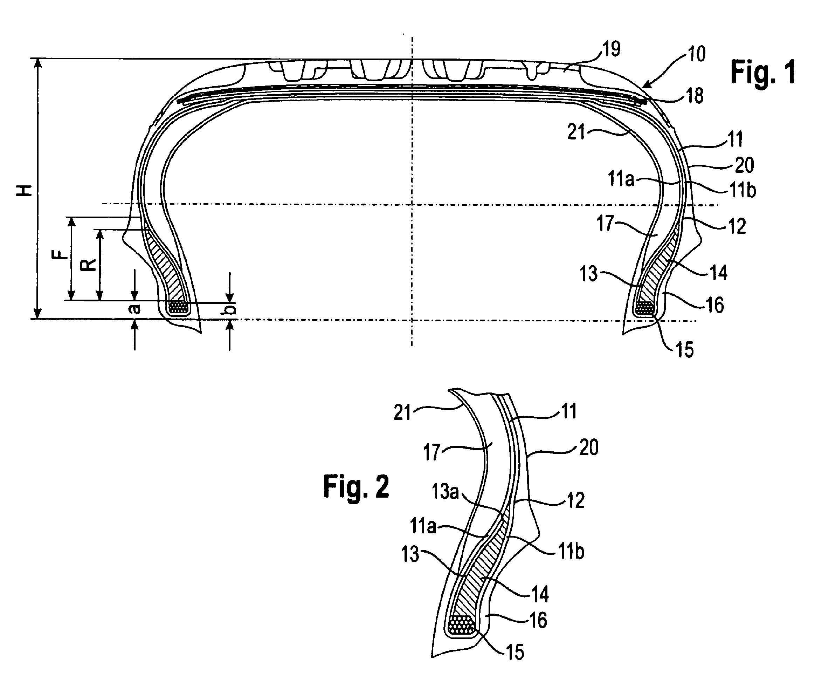

Referring to Fig. 1 and 2, a pneumatic tire 10 according to the invention comprises a tread strip 19 and a pair of sidewalls 20, connected to the tread strip 19. A carcass 11 is associated with two bead cores 15 which are arranged in a bead portion of the tire 10. The carcass 11 is turned up around the bead rings 15 as can be taken from Fig. 2. Thus, the carcass 11 comprises two portions 11 a, 11 b in the bead portion and in the area of the sidewalls 20. In the bead portion of the tire 10 the inner carcass portion 11a and the outer carcass portion 11 b are separated by the bead core 15 and the bead filler 14. The carcass portions 11 a, 11 b join together at a ply join 12. In the area of the sidewall 20 the carcass portions 11a and 11b are directly connected with each other. The outer carcass portion 11 b leads up to a belt structure 18 which is arranged between the carcass 11 and the tread strip 19. Typically, the belt structure 18 comprises a pair of layers including metal (e.g. steel) cords, inclined with respect to the equatorial plane of the tyre. A further radially outer layer comprising textile, e.g. nylon, cords can also be advantageously provided in the belt structure 18, the textile cords being arranged at a small angle with respect to the equatorial plane of the tyre (e.g. within 5°).

A runflat sidewall reinforcement 17 is provided at the inner side of each of the sidewalls 20. The runflat reinforcement 17, which adopts a supporting function when the tire is deflated, is arranged at the axial inner side of the sidewall 20 and is limited by an inner liner 21. At the axial outer side the runflat reinforcement 17 is directly connected to the carcass 11.

A reinforcer 13 comprising steel cords is directly connected with the outer wall of the inner carcass portion 11 a. The reinforcer 13 extends from about the bead core 15 towards the sidewall 20, in contact with bead filler 14. In particular, the end portion 13a of the reinforcer 13 is covered by a portion of the bead filler 14, which extends up to the ply join 12. Thus, the end portion 13a of the reinforcer 13 is practically embedded in the bead filler 14. In this way, damage to the ply join 12 of the carcass 11 by the reinforcer 13 is avoided. The reinforcer 13 preferably has a thickness comprised between 0.9 and 1.5 mm.The reinforcer consists eg. of steelcord 3x0.22 HT F75 (HT=high tensile, F 75=75 single cords 3x0.22 over a length of 10 cm) which is embedded in a rubber composition. The reinforcer 13 may comprise one layer. The reinforcer cords may be preferably arranged at an angle of 18 ° to 35 °, preferably 22°, with respect to the radial direction of the tire 10.

The bead filler 14 is made of a soft rubber compound with an IHRD hardness, lower than 80, preferably between 75 and 79, e.g. 78. The IRHD measurement (international rubber hardness degree) is carried out in accordance with the test method DIN 53519 sheet 2 at 23° C. In a preferred embodiment, the bead filler 14 comprises a rubber mixture with a NR/BR (Natural Rubber/Butadiene Rubber) ratio of 80 to 20. It has been found that the soft compound of the bead filler 14 effects better dampening properties which provide better comfort and noise properties of the tire.

The runflat sidewall reinforcement 17 comprises a rubber mixture having an IHRD hardness substantially similar to that of the bead filler 14 or slightly lower, e.g. of 75. The bead core 15 is typically embedded in a bead protection portion 16 having similar hardness to the bead filler 14.

The radial height R of the reinforcer 13 may be comprised between 30 and 45 mm, depending on the size of the tire. The radial height F of the bead filler 14 may be comprised between 35 and 55 mm, depending on the size of the tire. Thus, the bead filler 14 extends beyond the tip 13a of the reinforcer 13 by about 5 mm to 15 mm. The ratio bead filler height F/sidewall height H may be comprised between 0.35 and 0.50. The ratio reinforcement height R/ filler height f may be comprised between 0.65 and 0.90, depending on the size of the tire.

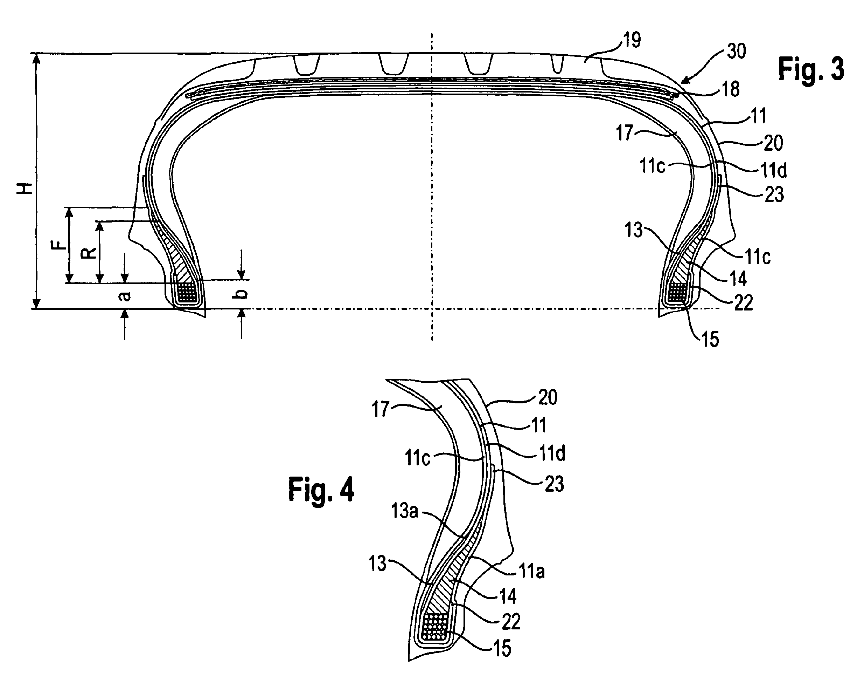

Fig. 3 and 4 show a second embodiment of the present invention. In the following description the same reference numbers are used as already introduced in connection with the description of the embodiment of Fig.1 and 2.

Referring to Fig. 3, the tire 30 comprises a carcass 11 which has a double-layer structure. The carcass 11 comprises a first layer 11c and a second layer 11 d. Both layers 11 c, 11 d of the carcass 11 are turned up around the bead core 15. The first carcass layer 11 c extends up to a first ply end 23 positioned in the middle portion of the sidewall 20. The second carcass layer 11 d extends up to a second ply end 22 positioned close to the radially outer portion of the bead core 15.

In this embodiment, the reinforcer 13 is positioned between the carcass layers 11c and 11 d. The bead filler 14 extends from the bead core 15 towards the second ply end 23 thus extending beyond the end portion 13a of the reinforcer 13. Thus, damage by the end portion 13a is avoided.

The bead filler 14 and the runflat reinforcement 17 have the same properties as the tire 10 shown in Fig.1 and 2.

Owing to the double layer construction of the carcass 11 the tire 30 is able to take up higher loads.

The construction and effects of the pneumatic tire according to the invention will be further explained with reference to the following test results.

### Test Results

Comparative tests were carried out with tires of different construction. In all test the tires had a tire size of 225/45 RF 91 W and a tread pattern Pirelli PZERO.

### Variant 1 (Prior art)

Construction: 2-ply carcass below tread strip, 2-ply carcass in sidewall; Bead filler made of hard rubber with IHRD hardness of 98; no reinforcer

### Variant 2 (Embodiment according to Fig. 1 and 2)

Construction: 1-ply carcass below tread strip, 2-ply carcass in sidewall; internal reinforcer comprising steel cords; bead filler made of soft rubber compound with IHRD hardness of 78;

### Variant 3 (Embodiment according to Fig. 3 and 4)

Construction: 2-ply carcass below tread strip; 2-ply carcass in sidewall; internal reinforcer comprising steel cords embedded between two carcass plies; bead filler made of soft rubber compound with IHRD hardness of 78.

The same sidewall runflat reinforcement was used in the three tires, having IHRD hardness of 75.

The runflat performance was tested with the following test parameters:
Inflation: 0 psi, valve core removed
Load: 470 Kg
Speed: 80 km/h
Duration: To tire failure (excessive vibration)

The tire properties as to steering, straight running, curve characteristics, damping and noise of the inflated tire are subjective results determined in driving tests by test drivers.

The test results can be gathered from Table 1. The evaluation is made on a scale from 0 to 10 wherein 10 is the best grade.

**Table 1**

| Variant | Weight (kg) | Runflat performance (km) | Rolling resistance (%) | Steering properties | Straight running properties | Curve charact. properties | Damping properties | Noise properties |
|---|---|---|---|---|---|---|---|---|
| 1 | 11.3 | 55 | 100 | 6 | 6.5 | 6 | 6 | 6.5 |
| 2 | 10.7 | 160 | 90 | 7.5 | 7.5 | 8 | 7.5 | 7.5 |
| 3 | 11.6 | 120 | 95 | 7 | 7 | 7 | 6.5 | 6.5 |

As can be seen, in Variant 2 the runflat performance is nearly three times higher than in the prior art tire according to Variant 1.The rolling resistance which is proportional to the consumption is reduced. Furthermore the subjective tire properties as to steering, straight running, curve characteristics, damping and noise are improved. The tire according to Variant 3 also shows significantly better properties than the prior art tire according to Variant 1.

As explained above in detail, the pneumatic tires 10, 30 comprise an internal reinforcer 13 comprising metal, e.g. steel, cords. The internal reinforcer 13 improves the handling properties of the inflated tire since the torsional stiffness of the tire is improved. Use of a soft compound for the bead filler 14 effects better dampening properties which provide better comfort and noise properties of the inflated tire. Runflat performance of the deflated tire is high since the reinforcer 13 is covered by the bead filler 14 and embedded in the same. Thus, any damage of the carcass by the end portion 13a of the reinforcer 13 is avoided.

### List of reference numbers

- 10: tire
- 11: carcass
- 11a: inner carcass portion
- 11b: outer carcass portion
- 11c: first carcass layer
- 11d: second carcass layer
- 12: ply join
- 13: reinforcer
- 14: bead filler
- 15: bead core
- 16: bead protection portion
- 17: runflat reinforcement
- 18: belt structure
- 19: tread strip
- 20: sidewall
- 21: inner liner
- 22: first ply end
- 23: second ply end
- 30: tire

## Claims

1. Pneumatic vehicle tire (10, 30) comprising a carcass (11), said carcass (11) being associated with two bead cores (15) in bead portions of the tire (10, 30), a belt structure (18) provided between the carcass (11) and a tread strip (19), a pair of sidewalls (20), a runflat reinforcement (17) arranged at the inner side of each sidewall (20), a reinforcer (13) arranged in each bead portion of the tire, and a bead filler(14) extending from the bead core (15) along the reinforcer (13), **characterized in that** the reinforcer (13) is arranged internally of the bead filler (14), the reinforcer (13) comprises metal cords, the bead filler (14) extends beyond an end (13a) of the reinforcer (13), and the bead filler (14) is made of a soft rubber compound with an IHRD hardness lower than 80.

2. Pneumatic tire according to claim 1, **characterized in that** the reinforcer (13) comprises steel cords.

3. Pneumatic tire according to claim 1 or claim 2, **characterized in that** the reinforcer (13) is directly connected to an axially inner portion (11a) of the carcass (11).

4. Pneumatic tire according to any one of the preceding claims, **characterized in that** the reinforcer (13) is arranged between two carcass layers (11c, 11 d).

5. Pneumatic tire according to any one of the preceding claims, **characterized in that** a radial height (R) of the reinforcer (13) is between 30 and 45 mm.

6. Pneumatic tire according to any one of the preceding claims, **characterized in that** the reinforcer (13) has a thickness between 0.9 and 1.5 mm.

7. Pneumatic tire according to any one of the preceding claims, **characterized in that** a ratio bead filler height (F)/ sidewall height (H) is between 0.35 and 0.50.

8. Pneumatic tire according to any one of the preceding claims, **characterized in that** the bead filler (14) has an IHRD hardness between 75 and 79, preferably 78.

9. Pneumatic tire according to any one of the preceding claims, **characterized in that** the runflat reinforcement (17) and the bead filler (14) have a substantially similar hardness.

10. Pneumatic tire according to any one of the preceding claims, **characterized in that** a bead protection portion (16) is provided embedding the bead core (15), the bead protection portion (16) having a substantially similar hardness as the bead filler (14).

11. Pneumatic tire according to any one of the preceding claims, **characterized in that** the carcass comprises a ply join (12) in a middle portion of each sidewall (20).

12. Pneumatic tire according to any one of the preceding claims, **characterized in that** an outer carcass portion (11 b) leads up to the steel belt (18).

13. Pneumatic tire according to any one of the preceding claims, **characterized in that** the carcass comprises a first ply end (22) in the region of the bead core (15) and a second ply end (23) in a middle portion of the sidewall (20).

14. Pneumatic tire according to any one of the preceding claims, **characterized in that** the bead filler (14) comprises a rubber mixture with a NR/BR ratio of 80 to 20.

## Patentansprüche

1. Pneumatischer Fahrzeugreifen (10, 30), umfassend eine Karkasse (11), wobei die Karkasse (11) mit zwei Wulstkernen (15) in Wulstbereichen des Reifens (10, 30) in Verbindung steht, eine Gürtelstruktur (18), die zwischen der Karkasse (11) und einem Profilstreifen (19) vorgesehen ist, ein Paar von Seitenwänden (20), eine Notlaufverstärkung (17), die an der Innenseite jeder Seitenwand (20) angeordnet ist, einen Verstärker (13), der in jedem Wulstbereich (15) des Reifens (10, 30) angeordnet ist, und einen Wulstfüller (14), der sich von dem Wulstkern (15) entlang des Verstärkers (13) erstreckt, **dadurch gekennzeichnet, dass** der Verstärker (13) innerhalb des Wulstfüllers (14) angeordnet ist, der Verstärker (13) metallische Schnüre umfasst, der Wulstfüller (14) sich über ein Ende (13a) des Verstärkers (13) hinaus erstreckt und der Wulstfüller (14) aus einer weichen Gummimischung mit einer IHRD-Härte geringer als 80 hergestellt ist.

2. Pneumatischer Reifen nach Anspruch 1, **dadurch gekennzeichnet, dass** der Verstärker (13) Stahlschnüre umfasst.

3. Pneumatischer Reifen nach Anspruch 1 oder 2, **dadurch gekennzeichnet, dass** der Verstärker (13) direkt mit einem axial inneren Bereich (11 a) der Karkasse (11) verbunden ist.

4. Pneumatischer Reifen nach einem der voranstehenden Ansprüche, **dadurch gekennzeichnet, dass** der Verstärker (13) zwischen zwei Karkassenschichten (11 c, 11 d) angeordnet ist.

5. Pneumatischer Reifen nach einem der voranstehenden Ansprüche, **dadurch gekennzeichnet, dass** eine radiale Höhe (R) des Verstärkers (13) zwischen 30 und 45 mm beträgt.

6. Pneumatischer Reifen nach einem der voranstehenden Ansprüche, **dadurch gekennzeichnet, dass** der Verstärker (13) eine Dicke zwischen 0,9 und 1,5 mm hat.

7. Pneumatischer Reifen nach einem der voranstehenden Ansprüche, **dadurch gekennzeichnet, dass** ein Verhältnis von Wulstfüllerhöhe (F) zu Seitenwandhöhe (H) zwischen 0,35 und 0,50 beträgt.

8. Pneumatischer Reifen nach einem der voranstehenden Ansprüche, **dadurch gekennzeichnet, dass** der Wulstfüller (14) eine IHRD-Härte zwischen 75 und 79, vorzugsweise 78, hat.

9. Pneumatischer Reifen nach einem der voranstehenden Ansprüche, **dadurch gekennzeichnet, dass** die Notlaufverstärkung (17) und der Wulstfüller (14) im Wesentlichen eine ähnliche Härte haben.

10. Pneumatischer Reifen nach einem der voranstehenden Ansprüche, **dadurch gekennzeichnet, dass** ein Wulstschutzbereich (16) zum Einbetten des Wulstkerns (15) vorgesehen ist, wobei der Wulstschutzbereich (16) eine im Wesentlichen ähnliche Härte wie der Wulstfüller (14) hat.

11. Pneumatischer Reifen nach einem der voranstehenden Ansprüche, **dadurch gekennzeichnet, dass** die Karkasse eine Lagenverbindung (12) in einem mittleren Bereich jeder Seitenwand (20) umfasst.

12. Pneumatischer Reifen nach einem der voranstehenden Ansprüche, **dadurch gekennzeichnet, dass** ein äußerer Karkassenbereich (11b) zu dem Stahlgürtel (18) hochführt.

13. Pneumatischer Reifen nach einem der voranstehenden Ansprüche, **dadurch gekennzeichnet, dass** die Karkasse ein erstes Lagenende (22) in dem Bereich des Wulstkerns (15) und ein zweites Lagenende (23) in einem mittleren Bereich der Seitenwand (20) umfasst.

14. Pneumatischer Reifen nach einem der voranstehenden Ansprüche, **dadurch gekennzeichnet, dass** der Wulstfüller (14) eine Gummimischung mit einem NR/BR-Verhältnis von 80 zu 20 umfasst.

## Revendications

1. Pneumatique de véhicule (10, 30) comprenant une carcasse (11), ladite carcasse (11) étant associée à deux tringles de talon (15) dans des parties de talon du pneumatique (10, 30), une structure de ceinture (18) prévue entre la carcasse (11) et une bande de roulement (19), une paire de flancs (20), un renfort de roulage à plat (17) agencé du côté interne de chaque flanc (20), un renfort (13) agencé dans chaque partie de talon du pneumatique, et une charge de talon (14) s'étendant depuis la tringle de talon (15) le long du renfort (13), **caractérisé en ce que** le renfort (13) est agencé à l'intérieur de la charge de talon (14), le renfort (13) comprend des câbles métalliques, la charge de talon (14) s'étend au-delà d'une extrémité (13a) du renfort (13), et la charge de talon (14) est en un composé de caoutchouc tendre ayant une dureté IRHD inférieure à 80.

2. Pneumatique selon la revendication 1, **caractérisé en ce que** le renfort (13) comprend des câbles d'acier.

3. Pneumatique selon la revendication 1 ou 2, **caractérisé en ce que** le renfort (13) est directement relié à une partie axialement intérieure (11a) de la carcasse (11).

4. Pneumatique selon l'une quelconque des revendications précédentes, **caractérisé en ce que** le renfort (13) est agencé entre deux couches de carcasse (11 c, 11 d).

5. Pneumatique selon l'une quelconque des revendications précédentes, **caractérisé en ce qu'une** hauteur radiale (R) du renfort (13) est comprise entre 30 et 45 mm.

6. Pneumatique selon l'une quelconque des revendications précédentes, **caractérisé en ce que** le renfort (13) a une épaisseur comprise entre 0,9 et 1,5 mm.

7. Pneumatique selon l'une quelconque des revendications précédentes, **caractérisé en ce qu'**un taux hauteur de charge de talon (F) / hauteur de flanc (H) est compris entre 0,35 et 0,50.

8. Pneumatique selon l'une quelconque des revendications précédentes, **caractérisé en ce que** la charge de talon (14) a une dureté IRHD comprise entre 75 et 79, de préférence 78.

9. Pneumatique selon l'une quelconque des revendications précédentes, **caractérisé en ce que** le renfort de roulage à plat (17) et la charge de talon (14) ont une dureté sensiblement similaire.

10. Pneumatique selon l'une quelconque des revendications précédentes, **caractérisé en ce qu'**une partie de protection de talon (16) est prévue, enrobant la tringle de talon (15), la partie de protection de talon (16) ayant une dureté sensiblement similaire à celle de la charge de talon (14).

11. Pneumatique selon l'une quelconque des revendications précédentes, **caractérisé en ce que** la carcasse comprend une jointure de nappe (12) dans une partie médiane de chaque flanc (20).

12. Pneumatique selon l'une quelconque des revendications précédentes, **caractérisé en ce qu'**une partie extérieure de carcasse (11 b) va jusqu'à la ceinture d'acier (18).

13. Pneumatique selon l'une quelconque des revendications précédentes, **caractérisé en ce que** la carcasse comprend une première extrémité de nappe (22) dans la région de la tringle de talon (15) et une deuxième extrémité de nappe (23) dans une partie médiane du flanc (20).

14. Pneumatique selon l'une quelconque des revendications précédentes, **caractérisé en ce que** la charge de talon (14) comprend un mélange de caoutchouc ayant un taux NR/BR de 80 à 20.
